Europäisches Patentamt

(19) European Patent Office

Office européen des brevets

(11) EP 0 419 799 B1

(12) # EUROPEAN PATENT SPECIFICATION

(45) Date of publication and mention
of the grant of the patent:
**20.05.1998 Bulletin 1998/21**

(51) Int. Cl.$^6$: **B22F 3/22**, B01D 39/20

(21) Application number: **90114336.2**

(22) Date of filing: **26.07.1990**

(54) **Slip casting process for preparing metal filters**

Schlickergiessverfahren zur Herstellung von Metallfiltern

Procédé de coulée en barbotine pour la préparation de filtres métalliques

(84) Designated Contracting States:
**DE FR IT**

(30) Priority: **28.07.1989 US 386123**

(43) Date of publication of application:
**03.04.1991 Bulletin 1991/14**

(73) Proprietor: **PALL CORPORATION
Glen Cove, New York 11542 (US)**

(72) Inventors:
• **Koehler, Paul Charles
McClean Road Courtland New York 13045 (US)**
• **Geibel, Stephen Arthur
Cortland, New York 13045 (US)**

• **Whitlock, Michael Blattner
Cortland, New York 13045 (US)**

(74) Representative:
**Altenburg, Udo, Dipl.-Phys. et al
Patent- und Rechtsanwälte,
Bardehle . Pagenberg . Dost . Altenburg .
Frohwitter . Geissler & Partner,
Galileiplatz 1
81679 München (DE)**

(56) References cited:
**EP-A- 0 190 035          EP-A- 0 325 179
CH-A- 604 826          FR-A- 1 194 268**

• **Encyclopedia of Chemical Technology, Kirk-
Othmer, 3rd Ed., Vol.10, pp.284 and 309-312**

EP 0 419 799 B1

Printed by Xerox (UK) Business Services
2.16.3/3.4

## Description

This invention relates to porous metal articles and more particularly to a method of making sintered metal particulate filters.

Metal filters have long been used for a variety of applications. For example, porous stainless steel filters prepared from sintered metal particulate, e.g., stainless steel powder, have been used in a variety of processes where high pressure drops are acceptable and in applications where relatively fine filtration capability must be combined with mechanical strength, resistance to high temperatures, and/or resistance to chemical attack. Such applications include the filtration of fine catalysts used in fluidized bed catalytic processes where elevated temperatures are encountered, e.g., fluid catalytic cracking processes, and in the manufacture of high fidelity recording tapes.

Still another use of such filters is in the filtration of molten resin used in the manufacture of polymeric films and fibers as, for example, polyester film.

The Swiss patent CH 604826 discloses a method of manufacturing a filter out of inorganic material. The method employed comprises forming the filter by aspiration of a mixture and compression under pressure.

In the European patent application 0 325 179 a process for producing tungsten heavy alloy sheet is disclosed. This process is for producing a sheet of tungsten heavy alloy which involves uniformly blending elemental powder components of the alloy by forming a slurry of the powder components in a liquid medium, removing the liquid medium from the powders and forming a planar cake of the powders, drying the cake, sintering the cake to a density $\geq$ to about 90% of the theoretical density of alloy to form the sheet.

Conventional sintered metal media suffer from variations in density in the process of laying the powder down prior to sintering. The present invention provides a method of powder laydown that results in very uniform filter performance.

In addition to a highly uniform filter performance, it is found that the products made by the process provided by the invention show a significant increase in efficiency and dirt holding capacity.

The present invention provides a method of making a porous metal filter sheet as claimed in claim 1.

The present invention also provides for a method of making a porous metal filter sheet which comprises: (a) forming a stabilized suspension comprising stainless steel particles having a particle size of from 1 to 75 $\mu$m dispersed in water in the presence of a stabilizing/binding agent which is a polyacrylic acid with a molecular weight of about 3,000,000 such that the weight ratio of the metal particulate to the liquid medium is in the range of from 1:1 to 0.025:1 and the stabilizing/binding agent is present in an amount that is from 0.2 to 1 weight percent, based on the combined weights of water and stabilizing/binding agent; (b) filtering the stabilized suspension under a pressure differential across the filter of from 7031 to 21,093 kgs/sq. meter (10 to 30 psi) through a screen that is fine enough to retain substantially all of the metal particles, so as to form a wet cake; (c) drying said wet cake at a temperature of from 37.8 to 93.3°C (100 to 200°F) so as to remove water and provide a dried cake with green strength; (d) removing the filter screen and compressing the dried cake to a predetermined thickness that is not less than about 60% of the precompression thickness; and (e) sintering the compressed dried cake at a temperature of from 871.1 to 1371.1°C (1,600 to 2,500°F) so as to fuse the metal particles and remove all volatile material and form a porous metal filter sheet.

The present invention also provides a porous metal filter sheet of substantially uniform pore structure comprising a metal particulate in which the individual particles of said particulate are bonded to each other and said sheet has a Bubble Point ratio of about 1.3 or less, preferably 1.2 or less, at a flow rate of about 60,000 cc/min/ft$^2$ (1.0 ft$^2$ = 0.093 m$^2$) and a nominal surface area of about 0.3 ft$^2$ (279 cm$^2$) or greater, e.g., a disc of about 7.5 inches (19.1 cm) in diameter.

The filter sheet has a uniform pore structure and this is understood to refer to the pore structure in any specific layer or horizontal cross-section of the filter. It is in fact often preferred to have a porosity that is graded from one face of the filter to the opposed face in the direction of filtration. Nevertheless, at any specific cross-section perpendicular to the direction of filtration, the filter has a substantially uniform porosity.

The stabilized suspension used to prepare the porous metal sheets provided by the invention is comprised of a liquid medium, the metal particulate, a stabilizing agent, and a binding agent. Preferably a single constituent serves to both stabilize the dispersion of metal particulate and, upon drying of the suspension, bind the individual particles to each other and provide thereby the requisite green or unsintered strength.

Typically, the stabilized suspension of the metal particulate and the liquid medium is prepared by the following general procedure.

The stabilizing/binding agent is combined with a liquid medium, preferably water for ease of use and disposal, in an amount such as to provide the requisite concentration of the stabilizing/binding agent in the liquid medium. The combination is mixed until uniform dispersion of the stabilizing/binding agent is obtained. The requisite amount of metal particulate material is then added and mixed to provide a uniform dispersion or suspension of the metal particulate in the liquid medium.

For some systems, this is all that is required. The suspension of metal particulate in the liquid medium containing the stabilizing/binding agent is stable after a thorough mixing has been completed. By "stable" or "stabilized" is meant that the metal particulate material is in suspension such that it will not settle out at a rate that would lead to non-uniform

2

deposition during the filtration.

"Pressure filtration" of the above suspension implies that there is an imposed pressure gradient across the filter device. This may be by a pressure increase above the filter medium, by a reduction in pressure below the filter or a combination of both.

The wet cake is dried until it has a green strength that will allow it to be handled and manipulated in the further stages without being damaged.

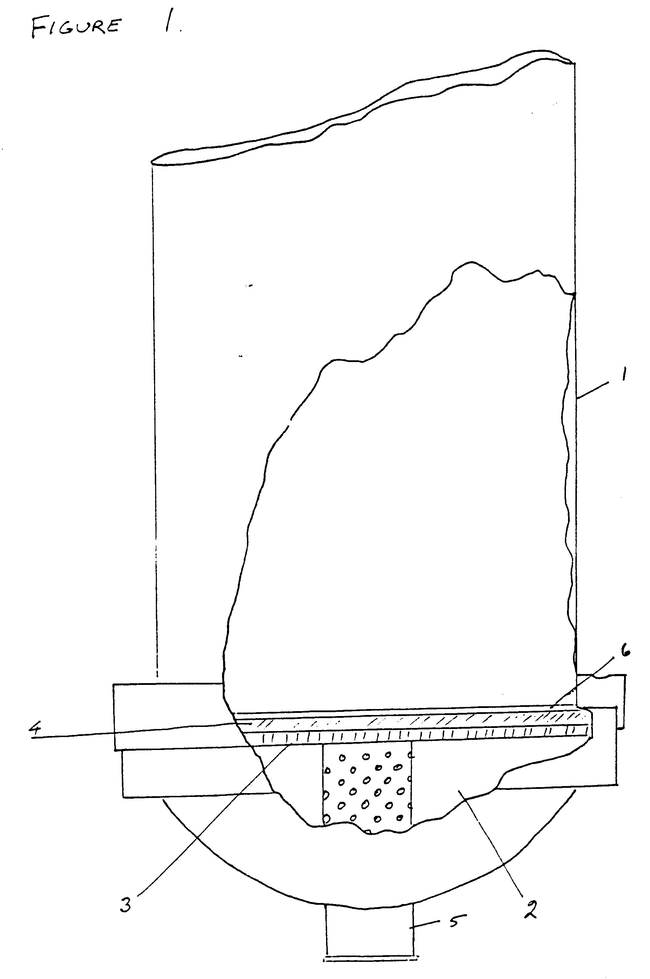

Figure 1 is a side elevation partly in cross-section of a filter device useful in the pressure filtration operation that forms part of the method of making a porous metal filter as provided by the invention.

The invention is now further described in terms of the preferred means of carrying it into effect. To facilitate this analysis, the process is subdivided into its five component suboperations: forming the suspension; filtering; production of dried cake; compression of dried cake; and sintering to produce the final filter medium.

Stabilized Suspension

The medium in which the metal particulate is suspended is most conveniently water-based but other liquids such as, for example, an alcohol or a light oil can be used if desired, provided that the resulting suspension can be readily filtered. The metal particulate can be formed from any of a variety of metal materials including alloys, various metals, such as nickel, chromium, copper, molybdenum, tungsten, zinc, tin, gold, silver, platinum, aluminum, cobalt, iron, and magnesium, as well as combinations of metals and metal alloys, including boron-containing alloys. Nickel/chromium alloys are preferred. Of these, the AISI designated stainless steels, which contain nickel, chromium, and iron, are most preferred. Particularly preferred are the AISI 300 series of stainless steels, commonly referred to as the austenitic stainless steels. Other stainless steels within the preferred class are the martensitic stainless steels, maraging steels, 17-7 and 17-4 PH stainless steels, ferritic stainless steels, and Carpenter no. 20 alloy. Other alloys within the preferred class of nickel/chromium alloys are the Hastelloys, the Monels, and the Inconels, as well as 50 weight percent nickel/50 weight percent chromium alloy. Multistructured materials, such as duplexes of ferritic and austenitic stainless steels may also be used.

The metal particulate used may have various shapes, including dendritic, acicular, and spherical, and will typically have nominal particle sizes in the range of from 1 to 300 μm, preferably from 1 to 150 μm, more preferably from 1 to 75 μm, and most preferably from 1 to 40 μm. The size of the metal particulate chosen for a particular combination is related to the desired porosity of the final product. For a finer filter, nominal particle sizes of from 1 to 75 μm, and preferably from 1 to 40 μm, are suitable, but for coarser filters, nominal particle sizes of from 100 to 300 μm are preferably used.

The weight ratio of the metal particulate to the liquid medium will typically be in the range of from 4.0:1 to 0.01:1, preferably from 1:1 to 0.025:1.

Typically, the stabilizing/binding agent used will be present in the liquid medium in an amount of 0.1 to 5 weight percent, more preferably from 0.2 to 1 weight percent (based on the weight of the liquid and the stabilizing/binding agent). The ratio of the stabilizing/binding agent to the weight of particulate should be as low as possible to limit the carbon content introduced into the structure prior to sintering. This is particularly important with austenitic stainless steel.

For many applications it is preferred to add an additional component to set up the stabilizing/binding agent. For example, with a polyacrylic acid stabilizing/binding agent in water, the addition of a neutralizing base, such as ammonium hydroxide, serves to neutralize the polyacrylic acid and increase the viscosity substantially, for example, to 10,000 to 50,000 centipoise (cp). Such systems are very thixotropic, i.e., they have a very high apparent viscosity when undisturbed (low shear condition) and hence settling of the suspended particulate is retarded. When vigorously agitated, however, they have a very low effective viscosity and, hence, are very effective in dispersing the metal particulate. Since these suspensions are very stable, they may be prepared in advance of the time they are used without significant settling out of the metal particulate. Alternatively, however, other stabilizing/binding agents may also be used which do not require the addition of another component to set up the suspension. For example, CARBOPOL™ 941 may be used without the addition of a neutralizing base. Viscosities in the range of from 200 to 50,000 cp, preferably in the range of from 200 to 10,000 cp, measured at the temperature of application may be used.

A variety of viscosity-increasing agents, which serve to stabilize the metal particulate suspension and also act as a binding agent when the liquid medium is removed by drying, may be used. Polyacrylic acid (available from B. F. Goodrich Chemical Company under the trade name CARBOPOL™) is particularly desirable. In general, polyacrylic acids with molecular weights of from 1,000,000 to 4,000,000 are suitable. As previously noted, CARBOPOL™ 941 is particularly preferred. CARBOPOL™ 941 has a molecular weight of about 1,250,000. CARBOPOL™ 934 may also be used. It has a molecular weight of about 3,000,000. Other materials which can be used include carboxy methyl cellulose, carboxy ethyl cellulose, polyethylene oxide, sodium alginate, carboxy methyl cellulose, guar gum, methyl cellulose, and locust bean gum. In general, when water is used as the liquid medium, water compatible stabilizing/binding agents which volatilize and/or decompose substantially completely prior to or during sintering may be used.

The austenitic stainless steel porous articles of this invention are characterized by having low carbon residues, i.e.,

less than about 0.08 weight percent, more preferably less than about 0.05 percent, and typically 0.03 percent or less, e.g., 0.015 percent. Low product carbon content is due to the very low concentration of binder resin which, in turn, is made possible by tailoring the weight ratio of the metal particulate to carrier (stabilizing/binding agent and liquid medium) in the suspension. Typically, the amount of carbon present in the stabilized suspension by virtue of the stabilizing/binding agent is about 0.25 percent or less (based on the weight of the metal particulate). Part of this is lost during heat up in the sintering operation, and the residual quantity of carbon actually absorbed into the metal is reduced by chemical or physical processes which occur during sintering.

A low carbon content is particularly significant when working with austenitic stainless steels since austenitic stainless steels with carbon contents greater than 0.08 weight percent are susceptible to precipitation of chromium carbides at the grain boundaries which can cause corrosion under many conditions. This susceptibility to corrosion is exacerbated when austenitic stainless steel containing greater than 0.08 weight percent carbon has been exposed to a temperature in the range of from 482.2° to 815.6°C (900 to 1,500°F) (sensitization range). Typically, the lower the carbon content, the lower the susceptibility of the austenitic stainless steel to intergranular corrosion. Austenitic stainless steel having carbon contents in the range of from 0.03 to 0.08 weight percent are stable when they have not been subjected to a temperature in the sensitization range. However, when such steels are exposed to a temperature in the sensitization range, chromium carbides will precipitate at the grain boundaries and the metal then becomes susceptible to attack by various corrosive media. Austenitic stainless steels with carbon contents less than 0.03 weight percent will not precipitate significant amounts of chromium carbides at the grain boundaries even after they have been subjected to a temperature in the sensitization range, thus exhibiting a higher corrosion resistance than comparable austenitic stainless steels with carbon contents greater than 0.03 weight percent.

The process by which the carbon is removed during sintering from austenitic stainless steel porous articles is not fully understood. It has, however, been empirically determined that it is generally not economically practical to obtain products with less than 0.015 to 0.08 percent of carbon if the starting mixture contains more than about 1 percent carbon. This is thought to be the case because, even if the carbonaceous binder melts and/or volatilizes, enough carbon is diffused into the metal from the liquid or vapor to undesirably increase its carbon content to levels well above 0.08 percent. For these reasons, the weight percent of the carbon in the stabilized suspension in the suspending medium to the weight of the particulate austenitic stainless steel should preferably be kept to less than about 0.25 percent of the weight of the metal particulate.

Substantially spherical particles may be used to provide a more tightly controlled pore size distribution uniformly distributed within the structure. Alternatively, various metal particulate morphology combinations can be employed in the stabilized suspension.

Agents which may be used to supply the binding function or to supplement the binding afforded by the stabilizing agent include sodium alginate, guar gum, and methyl cellulose.

The amount present should be balanced against the desire to have as little carbon content as possible in the dried compressed cake as it enters the sintering phase. Thus, if the stabilizing and binding functions are provided by different chemicals, it is preferred that the stabilizing agent used be one that, when used in effective amounts, results in the lowest residual carbon content in the cake entering the sintering furnace.

The amount of binding agent should normally not exceed 5% and generally from 0.2 to 1% by weight (based on the combined weights of the liquid and the binding agent) is suitable.

Pressure Filtration

The stabilized metal particulate suspension described above is then pressure filtered in a suitable device. Such a device would comprise a container, a filter means, a drainage means, and a pressure inducing means adapted to force the liquid medium and the bulk of the stabilizing/binding agent through the filter means leaving some of the liquid medium, the stabilizing/binding agent, and all of the metal particulate on the filter.

While it is preferred to increase the pressure in the container containing the liquid to enhance filtration, it is possible, as an alternative, or perhaps in addition, to filter into a zone of reduced pressure. In this way, the liquid medium is drawn through the filter medium as opposed to being only pushed through as would be the case if pressure inside the container were the sole driving force.

While many such devices can be envisaged, the present invention is further described with particular reference to the pressure filter illustrated in Figure 1. In the drawing, a generally cylindrical pressurizable container 1 has a filter mechanism closing its lower open end which communicates with an outlet plenum 2 drained by a perforated tube 5. The filter structure comprises a lower layer of a perforated reinforcement plate 3 and positioned thereon a composite support mesh 4 comprising three 10 x 10 mesh screens and one 40 x 40 mesh screen and, seated upon said composite support mesh, a filter screen 6 of 400 x 400 mesh.

In a typical process provided by the invention a stabilized suspension is introduced into the container, which is then closed and pressurized so as to give a pressure differential across the filter of at least 7031 kg/square meter (10 psi), preferably from 7031 to 70,310 kg/square meter (10 to 100 psi), and most preferably from 7031 to 21,093 kg/square meter (10 to 30 psi). The suspension medium is filtered through the filter structure and collects in the outlet plenum from which it is drained through the perforated tube 5. The metal particulate is deposited on the filter screen 6.

After filtration is complete, the filter screen 6, with the wet cake of deposited particulate metal in place upon it, is removed and placed on a first flat metal plate.

The geometrical configuration of the filter on which the wet cake is collected is not critical and can be any planar shape such as round, square, ellipsoidal, and so on. All such configurations are referred to hereafter as "sheets".

Drying Wet Cake

When water/CARBOPOL™ is used as the liquid medium/stabilizing/binding agent mixture, the plate bearing the wet cake may conveniently be then placed in a circulating air or convection oven at from 37.8 to 93.3°C (100 to 200°F), such as 65.6°C (150°F), for 4 to 6 hours to remove the water and to cure the binder. Other systems may require different drying temperatures and times. In this embodiment the dried cake is then removed from the oven and a second flat metal plate is placed on top of the dried cake. This structure is then inverted and the first metal plate (formerly the bottom plate) is removed, exposing the filter screen. This is then stripped from the cake leaving the dried cake on the second metal plate.

Compression of Dried Cake

As an alternative to the drying operation described above, or in addition thereto, the wet cake may be subjected to compression. This can be done to remove liquid from the wet cake, in which case it is preferably done at an elevated temperature as described above, or the dried cake resulting from a separate drying operation as described above can be compressed.

In either event, the cake in place upon the second metal plate is placed in a hydraulic press which, in one embodiment, is provided with parallel flat thickness spacers around the dried cake. These spacers act as "dead stops", preventing overcompression and precisely controlling thickness of the compressed cake. Compression is continued until the press reaches these dead stops. Alternatively and sometimes preferably, isostatic pressure can be used to compress the cake. In this event, a predetermined pressure is applied to the dried cake and the level is determined by the desired porosity of the final product.

It is found that compression prior to sintering has the effect of improving the ductility and the mechanical strength of the final filter while at the same time reducing pore size. Compression prior to sintering increases the number of points of contact and the area of contact between particles, resulting in a product of increased strength.

The amount of compression used will vary with the geometry and size of the particles used. In general, however, it should be sufficient to produce a voids volume in the final porous medium of from 40 to 70%, and preferably 45 to 60%.

Generally it is found sufficient to compress the dried cake to a thickness that is not less than about 50% and more preferably not less than about 60% of its pre-compression thickness. Expressed differently, the compression should usually result in a reduction of thickness of the pre-compression dried cake of not more than about 50% and preferably not less than about 40%.

In an alternative embodiment provided by the invention, the dried cake is sintered (see below) prior to compression. This also is effective in reducing the porosity of the filter sheet to a desired level. In such an embodiment isostatic pressure or compression to a desired thickness can be employed.

Sintering

The sintering step itself is preferably carried out at a temperature high enough to promote solid state diffusion of metal atoms from one particle to another to form the sintered bonds. For stainless steel metal particulate, a temperature in the range of from 871.1 to 1371.1°C (1,600 to 2,500°F), more preferably from 1037.8 to 1301.7°C (1,900 to 2,375°F), for a period from 0.5 to 2 hours has been found adequate. Preferably the sintering step is carried out under a pure hydrogen or other reducing atmosphere or, more preferably still, in a vacuum.

When lower melting materials are used such as bronze, lower sintering temperatures may be used. For example, with bronze, temperatures in the range of from 760 to 1037.8°C (1,400 to 1,900°F) are adequate.

While the sintering step is preferably carried out at a temperature high enough to promote solid state diffusion as noted above, it can also be carried out using liquid phase sintering at relatively lower temperatures, e.g., using silver with stainless steel particulate or tin with copper.

In addition to the method described above, it is possible to introduce minor elaborations without departing from the basic inventive concept. It is possible, for example, to perform the laydown of metal particulate in two or more stages by sequential pressure filtration of two or more different suspensions having different particle sizes or different morphologies. In this way, for example, the pore size of the final filter can be graded to provide a larger pore size at one face graduating in one or more steps to a finer pore size at the opposed face.

The filter mesh used in the pressure filtration operation is usually removed before sintering. This may be done directly before sintering or if desired before compression or drying. In an alternative embodiment the mesh may be left in place to provide added support or further filtering capacity.

It is also feasible to incorporate a fitting, which typically is a support structure such as a wire mesh, either on one or both faces of the filter or in the body of the filter. This can be done by placing the support mesh on top of the filter mesh, or by placing the support mesh in the desired position before compression. Where it is desired to locate the support mesh in the body of the filter, this may be done by forming the laydown in two separate stages and placing the support mesh on top of the laydown from the first stage and then subsequently laying down the second stage on top of the mesh.

The process provided by the present invention is now described with specific reference to the following example, which is for the purpose of illustration only and is intended to imply no limitation on the essential scope of the invention.

Example

A pressure vessel configured according to Figure 1, having an inside diameter of 21.3 cm. (8.375 inches), is prepared with a 400 x 400 mesh laydown screen. Four liters of 1.15% CARBOPOL™ 934 solution (viscosity 300 to 500 cp) is measured out and 237 g of -200,+325 316B stainless steel metal powder is added under constant agitation. As used herein, this nomenclature, i.e., -200, +325 mesh, refers to the characteristics of the particulate material. In this specific instance, it passes through a 200 mesh U.S. standard sieve but does not pass through a 325 mesh U.S. standard sieve.

After the metal powder is homogeneously mixed (after about 3 minutes), the stabilized suspension is poured into the pressure vessel on top of the filter (or laydown) screen. The pressure vessel is sealed and then pressurized to 14,062 kg/square meter (20 psi). The suspension medium is allowed to exit the housing via the drain. After about 30 seconds, all of the medium has drained from the housing and air is allowed to pass through the wet cake to remove excess moisture. This takes an additional 60 seconds.

The air flow is then turned off and the housing is disassembled. The net wet laydown thickness is approximately 0.24 cm. (0.093 inch) thick. The laydown is transferred to a 0.06 cm. (0.022 inch) thick stainless steel plate and then placed in a drying oven set at 65.6°C (150°F).

After 4 to 6 hours, the laydown is removed and a stainless steel plate is placed on top such that the laydown is sandwiched between two similar metal plates. The sandwich is then inverted and the lower metal plate (now the upper metal plate) is removed, exposing the 400 x 400 mesh screen. This is then stripped away leaving the dried laydown cake on the plate. This is then placed in a 508,000 kg. (500 ton) press. Four 0.23 cm. (0.092 inch) thick spaces are inserted around the laydown and the press is pressurized to 508,000 kg. (500 tons) total force to compress the laydown to a uniform thickness of 0.18 cm. (0.070 inch). The spacers act as the final thickness gauge.

The laydown is removed from the stainless steel plate and placed on a refractory sheet. When a sufficient quantity of the laydowns have been placed on a furnace load, the load is placed into the sintering furnace and sintered for 8 hours at 1232.2°C (2,250°F) under a 100 µm of Hg vacuum.

After sintering, the laydowns are removed and tested for permeability, bubble point (as hereinafter defined), thickness, and strength. The typical properties for a medium made by this process are: thickness, 0.17 ± 0.0025 cm. (0.067 ± 0.001 inch); pressure drop across the filter at an air flow rate of 30.48 meters/minute (100 ft/min), 18.1 ± 1.6 inches (1 inch = 2.54 cm) of water column; and void volume, 53% ± 1.5%.

The best way to quantify the improvement in uniformity of the products prepared by the process provided by the invention is in the relationship of the pressure at the first bubble point and the pressure at selected flow rates.

Four filters were prepared. Two (A-1 and A-2) were made by the process of the invention as described above in the Example, and two (B-1 and B-2) were made from identical metallic particles but dry-laid, and then compressed, and sintered using similar procedures to those used for A-1 and A-2. The first bubble point pressure (in inches of water column, i.e., "inches $H_2O$") was measured for each as well as the pressure at two different flow rates. The results are set forth in Table 1 below.

The Bubble Point tests referred to in the examples below were carried out at ambient temperature by placing the filter sheet in a suitable testing jig and placing the sheet to be tested in a liquid bath of Filmex B (190 proof denatured ethyl alcohol available from Ashland Chemical Company) to wet out all the pores. Air pressure was then applied to one side of the sheet and the pressure required for the first or initial bubble of air to appear on the opposed or second surface of the sheet was recorded. The pressure was then increased until a flow rate of 20,000 cubic centimeters of air per minute per square foot (0.093 square meter) of surface area was flowing through the structure. This pressure was then recorded. For all of the examples set out below, the distribution of bubbles on the second (downstream) surface of the sample tested at this point was observed to be quite uniform. After recording the pressure at this flow rate, the flow rate was increased to 60,000 cubic centimeters of air per minute per square foot (0.093 square meter) of surface area and the pressure again recorded. The ratio of the pressure required to maintain the specified flow rates, i.e., 20,000 and 60,000, to the pressure required to form the initial bubble is a measure of the uniformity of pore size in the formed structure. That is, the closer the ratio is to 1.0, the more uniform the pore size and the tighter the pore size distribution. To eliminate the effect of the pressure drop of the structure itself on this ratio, the clean pressure drop (that is, in air with no wetting of the pores) at each of the specified air flow rates of 20,000 and 60,000 was measured and subtracted from the pressure drop measured at the corresponding flow rate when the sample was submerged in Filmex B prior to calculation of each of the ratios.

TABLE 1

| Example | Pressure at First Bubble Point (inches $H_2O$) | Pressure at 20,000 cc/min/ft$^2$ (inches $H_2O$) | Pressure at 60,000 cc/min/ft$^2$ (inches $H_2O$) | Ratio of Pressure at 60,000 to Pressure of First Bubble Point |
|---|---|---|---|---|
| A-1 | 15.0 | 16.2 | 18.4 | 1.08 at 20,000 |
| | | | | 1.23 at 60,000 |
| A-2 | 14.6 | 15.9 | 18.0 | 1.08 at 20,000 |
| | | | | 1.23 at 60,000 |
| B-1 | 11.3 | 14.7 | 17.0 | 1.30 at 20,000 |
| | | | | 1.50 at 60,000 |
| B-2 | 12.4 | 14.7 | 17.3 | 1.18 at 20,000 |
| | | | | 1.40 at 60,000 |

The ratios of the pressures at the specified flow rates, i.e., 20,000 and 60,000, to the pressure required to form the first or initial Bubble Point were below 1.3. These relatively low ratios reflect the substantially uniform pore structures of the porous articles prepared by the method provided by the invention. As used herein for purposes of describing the uniform pore characteristics of the porous articles in accordance with the invention, the term "Bubble Point ratio" refers to the ratio of the pressure required to maintain a flow rate of 60,000 cubic centimeters per square foot (0.093 square meter) to the pressure required to form the first bubble of air to appear (as described in the test method set out above). The pressures are measured using the test method set out above, subtracting the clean pressure drop at a flow rate of 60,000 cubic centimeters of dry air per minute per square foot (0.093 square meters of surface area from the measured value prior to calculating the ratio.

In addition, the F2 data, which is a measure of pore size of a porous medium, was obtained for three other samples, A-3 and A-4 (according to the invention) and B-3 (a conventionally sintered filter).

The porous metal articles provided by this invention typically have F2 ratings at beta=100 (as hereinafter defined) of from 1 to 100 μm, preferably from 5 to 40 μm. The sintered structures provided by this invention have relatively high voids volume at a given efficiency relative to other sintered structures of this general type due to the uniformity of the formed structures provided by this invention and the relative absence of density variations.

The F2 test used in making pore size measurements is a modified version of the F2 test developed in the 1970's at Oklahoma State University (OSU). In the OSU test, a suspension of an artificial contaminant in an appropriate test fluid is passed through the test filter while continuously sampling the fluid upstream and downstream of the filter under test. The samples are analyzed by automatic particle counters for their contents of five or more preselected particle diameters and the ratio of the upstream to downstream count is automatically recorded. This ratio is known in the industry as the beta ratio (β).

The beta ratio for the diameters tested may be plotted as the ordinate against particle diameter as the abscissa, usually on a graph in which the ordinate is a logarithmic scale and the abscissa is a log$^2$ scale. A smooth curve is then drawn between the points. The beta ratio for any diameter within the range tested can then be read from this curve. Efficiency at a particular particle diameter is calculated from the beta ratio by the formula:

$$\text{Efficiency, percent} = 100 \ (1-1/\text{beta})$$

As an example, if beta=100, efficiency=99%.

Unless otherwise stated, the removal rating cited in the examples presented herein is the particle diameters at which beta=100; hence, the efficiency at the removal rating cited is 99%.

In the modified F2 test, efficiencies in the range of from 1 to 20 μm were determined using as a test contaminant a suspension of AC fine test dust, a natural silicious dust supplied by the AC Spark Plug Company. Prior to use, a suspension of the dust in water was mixed until the dispersion was stable. Test flow rate was ten liters per minute per square foot (0.093 square meter) of filter area. The results are shown in Table 2.

TABLE 2

| Example | F2 at $\beta_{10}$ (µm) | F2 at $\beta_{100}$ (µm) | F2 at $\beta_{1000}$ (µm) | F2 at $\beta\infty$ (µm) | Dirt Capacity (gm) |
|---|---|---|---|---|---|
| A3 | 6.9 | 8.8 | 11.2 | 13.1 | 2.61 |
| A4 | 5.8 | 8.8 | 10.9 | 12.3 | 2.53 |
| B-3* | 8.5 | 11.1 | 13.0 | 14.4 | 2.29 |

* Average of seven samples

As can be seen from the above data, the filters of the invention were superior to the prior art filters in dirt capacity, even at lower F2 ratings. In general, preferred filter sheets of the invention have an F2 rating at beta=100 of from 1 to 100 µm and preferably from 5 to 60 µm.

Similar filters with similar bubble point ratios and F2 ratings are obtained when isostatic compression is substituted for the "dead-stop" compression described in the Example, all other conditions remaining essentially unchanged.

In similar manner to preparation of Examples A-1 and A-2, ten (10) discs having nominal diameters of 7.5 inches (19.1 cm.) were prepared and the Bubble Point Ratio for each disc was determined with the results shown in Table 3 below.

TABLE 3

| BUBBLE POINT RATIO FOR LIQUID LAYDOWN TEST AREA OF: 0.31 FT$^2$ (279 CM$^2$) | | | |
|---|---|---|---|
| EXAMPLE | PRESSURE AT BUB-BLE POINT (in inches H$_2$O) | PRESSURE at 60,000 cc/min/ft$^2$ | BUBBLE POINT RATIO |
| C-1 | 15.0 | 15.2 | 1.01 |
| C-2 | 14.1 | 14.3 | 1.01 |
| C-3 | 14.7 | 14.9 | 1.01 |
| C-4 | 14.6 | 14.8 | 1.01 |
| C-5 | 15.2 | 15.4 | 1.01 |
| C-6 | 14.9 | 15.1 | 1.01 |
| C-7 | 14.6 | 15.4 | 1.05 |
| C-8 | 14.0 | 15.0 | 1.07 |
| C-9 | 14.0 | 15.4 | 1.10 |
| C-10 | 14.5 | 15.8 | 1.09 |

**Claims**

1. A method of making a porous metal filter sheet which comprises:

   (a) forming a stabilized suspension of a metal particulate in a liquid medium;

   (b) pressure filtering the stabilized suspension through a screen that is fine enough to retain substantially all of the particles so as to form a wet cake, wherein a pressure gradient across the filter medium is imposed by a pressure increase above the filter medium, and a pressure differential across the filter of at least 7,031 kg/m$^2$ is given for filtering the suspension through the filter structure;

(c) removing liquid from said wet cake to provide a dried cake with green strength; and

(d) sintering the dried cake to fuse the metal particles into a porous filter sheet and remove all volatile material.

2. A method according to claim 1 in which the dried cake is compressed prior to sintering.

3. A method according to claim 1 in which the removing of liquid from the wet cake is carried out at an elevated temperature.

4. A method according to claim 1 in which the sintered dried cake is subjected to compression to decrease the pore size of the resultant filter element.

5. A method according to claim 1 in which the filter screen is removed from the cake prior to sintering.

6. A method according to claim 1 in which the metal particulate is a stainless steel.

7. A method according to claim 1 in which the metal particulate has a particle size of from 1 to 300 μm.

8. A method according to claim 1 in which the stabilized suspension contains a stabilizer agent that also acts as a binder to provide green strength upon formation of the dried cake.

9. A method according to claim 8 in which the stabilizer/binder is a polyacrylic acid having a molecular weight of from 1,000,000 to 4,000,000.

10. A method according to claim 1 in which the weight ratio of metal particulate to liquid medium is in the range of from 4:1 to 0.01:1.

11. A method according to claim 1 in which the metal particulate is laid down in a plurality of layers as a result of a plurality of filtration operations and the particle size and/or morphology of the metal particulate used in each successive operation is changed by comparison with that used in the previous operation.

12. A method according to one of the preceding claims, which includes filtering into a zone of reduced pressure so that the liquid medium is additionally drawn, and not only pushed, through the filter medium.

13. A method of making a porous metal filter sheet, which comprises:

(a) forming a stabilized suspension comprising stainless steel particles having a nominal particle size of from 1 to 75 μm dispersed in water in the presence of a stabilizing/binding agent which is a polyacrylic acid with a molecular weight of about 3,000,000 such that the weight ratio of the metal particulate to the liquid medium is in the range of from 1:1 to 0.025:1 and the stabilizing/binding agent is present in an amount that is from 0.2 to 1 weight percent, based on the combined weights of water and stabilizing/binding agent;

(b) filtering the stabilized suspension under a pressure differential across the filter of from 7031 to 21,093 kg/square meter (10 to 30 psi) through a screen that is fine enough to retain substantially all of the metal particles, so as to form a wet cake;

(c) drying said wet cake at a temperature of from 37.8 to 93.3°C (100 to 200°F) so as to remove water and provide a dried cake with green strength;

(d) removing the filter screen and compressing the dried cake to a predetermined thickness that is not less than about 60% of the precompression thickness; and

(e) sintering the compressed dried cake at a temperature of from 871.1 to 1371.1°C (1,600 to 2,500°F) so as to fuse the metal particles and remove all volatile material and form a porous metal filter sheet.

14. A porous metal filter sheet of substantially uniform pore structure comprising a metal particulate in which the individual particles of said particulate are bonded to each other and said sheet has a Bubble Point ratio of about 1.2 or less at a flow rate of about 645,835 cc/min/m$^2$ (60,000 cc/min/ft$^2$), said filter sheet having a nominal surface area of at least 0.3 ft$^2$ (279 cm$^2$) or greater.

15. The porous metal filter sheet of claim 14 wherein said sheet has a Bubble Point ratio of about 1.2 or less.

16. The porous metal filter sheet of claim 15 wherein said particulate is stainless steel.

17. The porous metal filter sheet of claim 16 wherein said sheet has an F2 rating at beta=100 of from 1 to 100 µm wherein the F2 data is a measure of pore size of a porous medium.

18. The porous metal filter sheet of claim 17 wherein said stainless steel is austenitic stainless steel.

19. The porous metal filter sheet of claim 14 wherein said sheet has a graded pore structure across its thickness including a finer pored layer and a coarser pored layer.

20. The porous metal filter sheet of claim 19 wherein said finer layer is 0.038 cm. (0.015 inch) thick and said coarser layer is 0.102 cm. (0.040 inch) thick.

21. The porous metal filter sheet of claim 20 wherein said finer layer comprises metal particulate having a nominal particle size of 1 to 75 µm and said coarser layer comprises metal particulate having a nominal particle size of 100 to 300 µm.

22. The porous metal filter sheet of claim 14 wherein the sheet comprises a plurality of layers with at least one layer being formed from metal particulates having a morphology different from that of the particulate forming a contiguous layer.

23. The porous metal filter sheet of claim 14 having one or more fittings sinter-bonded to said sheet.

24. The porous metal filter sheet of claim 14 wherein said sheet has an F2 rating at beta=100 of from 5 to 60 µm wherein the F2 data is a measure of pore size of a porous medium.

**Patentansprüche**

1. Verfahren zur Herstellung einer porösen Metallfilterlage, das folgende Stufen umfaßt:

   (a) Bildung einer stabilisierten Suspension aus einem teilchenförmigen Metall in einem flüssigen Medium;
   (b) Druckfiltration der stabilisierten Suspension durch ein Sieb, das fein genug ist, um im wesentlichen die Gesamtmenge der Teilchen unter Bildung eines nassen Kuchens zurückzuhalten, wobei ein Druckgradient über das Filtermedium durch einen Druckanstieg oberhalb des Filtermediums angelegt wird und eine Druckdifferenz über den Filter von mindestens 7031 kg/m$^2$ zur Filtration der Suspension durch die Filterstruktur angewandt wird;
   (c) Entfernung von Flüssigkeit aus dem nassen Kuchen, wobei ein getrockneter Kuchen mit Grünfestigkeit bereitgestellt wird; und
   (d) Sintern des getrockneten Kuchens zum Verschmelzen der Metallteilchen zu einer porösen Filterlage und zur Entfernung des gesamten flüchtigen Materials.

2. Verfahren nach Anspruch 1, bei dem der getrocknete Kuchen vor dem Sintern komprimiert wird.

3. Verfahren nach Anspruch 1, bei dem die Entfernung von Flüssigkeit aus dem nassen Kuchen bei einer erhöhten Temperatur durchgeführt wird.

4. Verfahren nach Anspruch 1, bei dem der gesinterte getrocknete Kuchen einer Kompression zur Verringerung der Porengröße des erhaltenen Filterelements unterzogen wird.

5. Verfahren nach Anspruch 1, bei dem das Filtersieb von dem Kuchen vor dem Sintern entfernt wird.

6. Verfahren nach Anspruch 1, bei dem es sich bei dem teilchenförmigen Metall um rostfreien Stahl handelt.

7. Verfahren nach Anspruch 1, bei dem das teilchenförmige Material eine Teilchengröße von 1 bis 300 µm aufweist.

**8.** Verfahren nach Anspruch 1, bei dem die stabilisierte Suspension ein Stabilisierungsmittel enthalt, das auch als ein Bindemittel wirkt, um für eine Grünfestigkeit bei Bildung des getrockneten Kuchens zu sorgen.

**9.** Verfahren nach Anspruch 8, bei dem es sich bei dem Stabilisierungs/Bindemittel um eine Polyacrylsäure mit einem Molekulargewicht von 1 000 000 bis 4 000 000 handelt.

**10.** Verfahren nach Anspruch 1, bei dem das Gewichtsverhältnis von teilchenförmigem Metall zu flüssigem Medium im Bereich von 4:1 bis 0,01:1 liegt.

**11.** Verfahren nach Anspruch 1, bei dem das teilchenförmige Metall in einer Mehrzahl von Schichten als Ergebnis einer Mehrzahl von Filtrationsschritten abgelegt wird und die Teilchengröße und/oder die Morphologie des in den einzelnen aufeinanderfolgenden Schritten verwendeten teilchenförmigen Metalls im Vergleich mit dem vorhergehenden Schritt geändert werden.

**12.** Verfahren nach einem der vorstehenden Ansprüche, das die Filtration in eine Zone verringerten Drucks umfaßt, so daß das flüssige Medium durch das Filtermedium zusätzlich gezogen und nicht nur geschoben wird.

**13.** Verfahren zur Herstellung einer porösen Metallfilterlage, das folgende Stufen umfaßt:

(a) Bildung einer stabilisierten Suspension, die Teilchen aus rostfreiem Stahl mit einer Nennteilchengröße von 1 bis 75 μm, dispergiert in Wasser in Gegenwart eines Stabilisierungs/Bindungsmittels, bei dem es sich um eine Polyacrylsäure mit einem Molekulargewicht von etwa 3 000 000 handelt, umfaßt, wobei das Gewichtsverhältnis des teilchenförmigen Materials zu dem flüssigen Medium im Bereich von 1:1 bis 0,025:1 liegt und das Stabilisierungs/Bindungsmittel in einer Menge von 0,2 bis 1 Gew.-%, bezogen auf die kombinierten Gewichte aus Wasser und Stabilisierungs/Bindungsmittel, vorhanden ist;
(b) Filtration der stabilisierten Suspension unter einer Druckdifferenz über den Filter von 7031 bis 21 093 kg/m$^2$ (10 bis 30 psi) durch ein Sieb, das fein genug ist, um im wesentlichen die Gesamtmenge der Metallteilchen unter Bildung eines nassen Kuchens zurückzuhalten;
(c) Trocknen des nassen Kuchens bei einer Temperatur von 37,8 bis 93,3°C (100 bis 200°F), um das Wasser zu entfernen und einen getrockneten Kuchen mit Grünfestigkeit bereitzustellen;
(d) Entfernung des Filtersiebs und Kompression des getrockneten Kuchens auf eine festgelegte Dicke, die nicht weniger als etwa 60% der Dicke vor der Kompression beträgt; und
(e) Sintern des komprimierten getrockneten Kuchens bei einer Temperatur von 871,1 bis 1371,1°C (1600 bis 2500°F), um die Metallteilchen zu verschmelzen und die Gesamtmenge des flüchtigen Materials zu entfernen und eine poröse Metallfilterlage zu bilden.

**14.** Poröse Metallfilterlage mit im wesentlichen gleichmäßiger Porenstruktur, die ein teilchenförmiges Metall umfaßt und in der die einzelnen Teilchen des teilchenförmigen Materials aneinander gebunden sind, wobei die Lage ein Blasenpunktverhältnis von etwa 1,2 oder weniger bei einer Strömungsgeschwindigkeit von etwa 645 835 cm$^3$/min/m$^2$ (60 000 cm$^3$/min/ft$^2$) aufweist und die Filterlage eine Nennoberfläche von mindestens 0,3 ft$^2$ (279 cm$^2$) oder mehr aufweist.

**15.** Poröse Metallfilterlage nach Anspruch 14, wobei die Lage ein Blasenpunktverhältnis von etwa 1,2 oder weniger aufweist.

**16.** Poröse Metallfilterlage nach Anspruch 15, wobei es sich bei dem teilchenförmigen Material um rostfreien Stahl handelt.

**17.** Poröse Metallfilterlage nach Anspruch 16, wobei die Lage eine F2-Bewertung bei beta = 100 von 1 bis 100 μm aufweist, wobei die F2-Daten ein Maß für die Porengröße eines porösen Mediums sind.

**18.** Poröse Metallfilterlage nach Anspruch 17, wobei es sich bei dem rostfreien Stahl um austenitischen rostfreien Stahl handelt.

**19.** Poröse Metallfilterlage nach Anspruch 14, wobei die Lage eine abgestufte Porenstruktur über ihre Dicke unter Einschluß einer Schicht mit feineren Poren und einer Schicht mit gröberen Poren aufweist.

**20.** Poröse Metallfilterlage nach Anspruch 19, wobei die feinere Schicht 0,038 cm (0,015 in) dick ist und die gröbere Schicht 0,102 cm (0,040 in) dick ist.

**21.** Poröse Metallfilterlage nach Anspruch 20, wobei die feinere Schicht teilchenförmiges Metall mit einer Nennteilchengröße von 1 bis 75 μm umfaßt und die gröbere Schicht teilchenförmiges Metall mit einer Nennteilchengröße von 100 bis 300 μm umfaßt.

**22.** Poröse Metallfilterlage nach Anspruch 14, wobei die Lage eine Mehrzahl von Schichten umfaßt, wobei mindestens eine Schicht aus teilchenförmigem Metall mit einer anderen Morphologie als der des teilchenförmigen Materials, das eine benachbarte Schicht bildet, gebildet ist.

**23.** Poröse Metallfilterlage nach Anspruch 14 mit einem oder mehreren an die Lage sintergebundenen Anschlußstükken.

**24.** Poröse Metallfilterlage nach Anspruch 14, wobei die Lage eine F2-Bewertung bei beta = 100 von 5 bis 60 μm aufweist, wobei die F2-Daten ein Maß für die Porengröße eines porösen Mediums sind.

**Revendications**

**1.** Procédé de fabrication d'une feuille filtrante de métal poreux qui comporte les étapes consistant a :

(a) former une suspension stabilisée constituée d'un métal particulaire dans un milieu liquide,
(b) filtrer sous pression la suspension stabilisée à travers un écran qui est assez fin pour retenir pratiquement toutes les particules de manière à former un gâteau humide, un gradient de pression à travers le support filtrant étant imposé par une augmentation de pression au-dessus du support filtrant, et une pression différentielle à travers le filtre d'au mois 7,031 kg/m$^2$ étant établie pour filtrer la suspension à travers la structure filtrante,
(c) éliminer le liquide dudit gâteau humide pour fournir un gâteau séché ayant une résistance en vert, et
(d) fritter le gâteau séché pour fusionner les particules métalliques dans une feuille filtrante poreuse et éliminer tout matériau volatile.

**2.** Procédé selon la revendication 1, dans lequel le gâteau séché est compressé avant le frittage.

**3.** Procédé selon la revendication 1, dans lequel l'élimination du liquide du gâteau humide est effectuée à une température élevée.

**4.** Procédé selon la revendication 1, dans lequel le gâteau séché fritté est soumis à une compression pour diminuer la dimension de pore de l'élément filtrant résultant.

**5.** Procédé selon la revendication 1, dans lequel l'écran filtrant est retiré du gâteau avant le frittage.

**6.** Procédé selon la revendication 1, dans lequel le métal particulaire est de l'acier inoxydable.

**7.** Procédé selon la revendication 1, dans lequel le métal particulaire a une dimension de particule allant de 1 à 300 μm

**8.** Procédé selon la revendication 1, dans lequel la suspension stabilisée contient un agent stabilisant qui agit également en tant que liant pour fournir une résistance en vert lors de la formation du gâteau séché.

**9.** Procédé selon la revendication 8, dans lequel l'agent stabilisant/liant est un acide polyacrylique ayant un poids moléculaire allant de 1000000 à 4000000.

**10.** Procédé selon la revendication 1, dans lequel le rapport de poids du métal particulaire par rapport au milieu liquide est situé dans la plage allant de 4:1 à 0,01:1.

**11.** Procédé selon la revendication 1, dans lequel le métal particulaire est déposé en couches en une pluralité de couches en résultat d'une pluralité d'opérations de filtration, et la dimension de particule et/ou la morphologie du métal particulaire utilisé dans chaque opération successive est modifiée par rapport à celle utilisée dans l'opération précédente.

**12.** Procédé selon l'une quelconque des revendications précédentes, qui comporte l'étape consistant à filtrer dans une zone de pression réduite de sorte que le milieu liquide est en plus tiré, et pas seulement poussé, à travers le support filtrant.

**13.** Procédé de fabrication d'une feuille filtrante de métal poreux, qui comporte les étapes consistant à :

(a) former une suspension stabilisée comportant des particules d'acier inoxydable ayant une dimension de particule nominale allant de 1 à 75 μm, dispersées dans de l'eau en présence d'un agent stabilisant/liant qui est un acide polyacrylique ayant un poids moléculaire d'environ 3000000 de sorte que le rapport de poids du métal particulaire par rapport au milieu liquide est situé dans la plage allant de 1:1 à 0,025:1 et que l'agent stabilisant/liant est présent selon une quantité allant de 0,2 à 1 pour-cent en poids, sur la base des poids combinés d'eau et de l'agent stabilisant/liant,
(b) filtrer la suspension stabilisée sous une pression différentielle à travers le filtre allant de 7031 à 21093 kg/mètre carré (10 à 30 psi) à travers un écran qui est assez mince pour retenir pratiquement toutes les particules métalliques, de manière à former un gâteau humide,
(c) sécher ledit gâteau humide à une température allant de 37,8 à 93,3°C (100 à 200°F) de manière à éliminer l'eau et à fournir un gâteau séché ayant une résistance en vert,
(d) retirer l'écran filtrant et compresser le gâteau séché jusqu'à une épaisseur prédéterminée qui n'est pas inférieure à environ 60 % de l'épaisseur avant la compression, et
(e) fritter le gâteau séché compressé à une température allant de 871,1 à 1371,1°C (1600 à 2500°F) de manière à fusionner les particules métalliques et à éliminer tout matériau volatile et à former une feuille filtrante de métal poreux.

**14.** Feuille filtrante de métal poreux ayant une structure poreuse pratiquement uniforme, comportant un métal particulaire, dans laquelle les particules individuelles dudit métal particulaire sont liées les unes aux autres et ladite feuille a un rapport de point de bulle d'environ 1,2 ou moins à un débit d'environ 645835 cc/min/m$^2$ (60000 cc/min/pied carré), ladite feuille filtrante ayant une surface superficielle nominale d'au moins 279 cm$^2$ (0,3 pied carré) ou plus.

**15.** Feuille filtrante de métal poreux selon la revendication 14, dans laquelle ladite feuille a un rapport de point de bulle d'environ 1,2 ou moins.

**16.** Feuille filtrante de métal poreux selon la revendication 15, dans laquelle ledit métal particulaire est de l'acier inoxydable.

**17.** Feuille filtrante de métal poreux selon la revendication 16, dans laquelle ladite feuille a une taille F2 à bêta = 100 allant de 1 à 100 μm, les données F2 étant une mesure de dimension de pore d'un support poreux.

**18.** Feuille filtrante de métal poreux selon la revendication 17, dans laquelle ledit acier inoxydable est un acier inoxydable austénitique.

**19.** Feuille filtrante de métal poreux selon la revendication 14, dans laquelle ladite feuille a une structure de pore qui varie graduellement à travers son épaisseur, comportant une couche plus mince de pores et une couche plus grosse de pores.

**20.** Feuille filtrante de métal poreux selon la revendication 19, dans laquelle ladite couche plus fine a une épaisseur de 0,038 cm (0,015 pouce) et ladite couche plus grossière a une épaisseur de 0,102 cm (0,040 pouce).

**21.** Feuille filtrante de métal poreux selon la revendication 20, dans laquelle ladite couche plus mince comporte un métal particulaire ayant une dimension de particule nominale allant de 1 à 75 μm et ladite couche plus grosse comporte un métal particulaire ayant une dimension de particule nominale allant de 100 à 300 μm.

**22.** Feuille filtrante de métal poreux selon la revendication 14, dans laquelle la feuille comporte une pluralité de couches, au moins une couche étant constituée de particules métalliques ayant une morphologie différente de celle du métal particulaire qui forme une couche contiguë.

**23.** Feuille filtrante de métal poreux selon la revendication 14 ayant un ou plusieurs agencements liés par frittage à ladite feuille.

**24.** Feuille filtrante de métal poreux selon la revendication 14, dans laquelle ladite feuille a une taille F2 à bêta = 100 allant de 5 à 60 μm, les données F2 étant une mesure de dimension de pore d'un support poreux.

FIGURE 1.